# EUROPÄISCHE PATENTSCHRIFT

(11) **EP 3 209 487 B1**
(45) Veröffentlichungstag und Bekanntmachung des Hinweises auf die Patenterteilung: **04.12.2024**
(21) Anmeldenummer: 15797594.7
(22) Anmeldetag: 14.10.2015
(51) Int. Cl.: B29C 70/32, B29C 70/48, B29C 70/44, B29C 70/54, B29L 31/00

(54) **ERHÖHUNG DER TRÄNKBARKEIT VON TROCKENEN FASERPREFORMEN**
INCREASE OF THE IMPREGNATION ABILITY OF DRY FIBER PREFORMS
AUGMENTATION DE L'APTITUDE À L'IMPRÉGNATION DE PRÉFORMES SÈCHES EN FIBRES

(30) Priorität: 24.10.2014 DE 102014015804
(43) Veröffentlichungstag der Anmeldung: 30.08.2017
(73) Patentinhaber: MT Aerospace AG, 86153 Augsburg (DE)
(72) Erfinder: FRÖHLICH, Angelika, 85253 Kleinberghofen (DE); REIPRICH, Michael, 86153 Augsburg (DE); LIPPERT, Thomas, 80997 München (DE); ORTMANN, Peter, 86150 Augsburg (DE)
(74) Vertreter: Grape & Schwarzensteiner
(86) Internationale Anmeldenummer: PCT/EP2015/002029
(87) Internationale Veröffentlichungsnummer: WO 2016/062385

(56) Entgegenhaltungen:
- EP-A1- 1 419 875
- EP-A1- 1 491 323
- WO-A1-2013/083178
- US-A1- 2010 052 203
- US-A1- 2014 014 667

## Beschreibung

Die vorliegende Erfindung betrifft die Herstellung von rotationssymmetrischen Kompositbauteilen, welche aus trockenen Preformen aus Verstärkungsfasern aufgebaut und anschließend mit flüssigem Harz zur Ausbildung einer Harzmatrix imprägniert bzw. infiltriert werden. Insbesondere betrifft die vorliegende Erfindung die Herstellung von Faserpreformen mit einer erhöhten Tränkbarkeit für Flüssigharz.

In der Luft- und Raumfahrt werden zunehmend Kompositbauteile aus faserverstärktem Kunststoff gefordert, da sie im Vergleich zu Metallkomponenten eine erhebliche Gewichtseinsparung mit sich bringen und da sie aufgrund ihrer variierbaren Materialeigenschaften an die verschiedensten Belastungsprofile angepasst werden können. Die Verwendung trockener Preformen wird aus Kostengründen bevorzugt, da die Bereitstellung von bereits vorgetränkten Prepregs aufwändig ist und sich Lagerprobleme ergeben können.

Die Faserpreformen werden üblicherweise durch Ablegen und/oder Abwickeln von vorgefertigten Faser-Flächengebilden oder Faserbündeln (Rovings) auf einem Kern bzw. einer Form hergestellt. Ein bekanntes Verfahren hierzu ist beispielsweise das AFP-Verfahren, bei dem trockene Faserrovings entlang einer beliebigen Bahnkurve maschinell abgelegt und fixiert werden, um die Preformen zu stabilisieren. Die fertigen, endformnahen Faserpreformen werden dann üblicherweise in eine verschließbare Form oder einen Vakuumsack eingelegt und mit einem aushärtbaren Kunststoffmaterial (Harzmatrix) imprägniert bzw. infiltriert.

Bei der Herstellung von Druckbehältern ist das Nasswickeln mit in-situ harzgetränkten Rovings Stand der Technik. Nachteile sind hierbei der prozessbedingt erforderliche Harzüberschuss, der Mehrkosten verursacht, Setzwege des Laminates, die besonders bei dickwandigen Bauteilen zu Laminatwelligkeiten führen können und dann durch den stufenweisen Aufbau der Laminatdicke mit Zwischenhärtungen vermieden werden müssen, sowie die Begrenzungen durch die verfügbare Topfzeit des Harzes.

Als Alternative bieten sich das Harzinfusionsverfahren und RTM an, bei denen durch Wickeln und Legen trockener Faserwerkstoffe zunächst eine Faserpreform hergestellt wird, die dann mit Harzmatrix getränkt wird. Die abschließende Aushärtung liefert das fertige Bauteil. Die Preform muss kompakt und dicht sein, damit sie wenig Setzweg in Dickenrichtung hat und somit Faserwelligkeiten nicht entstehen können. Allerdings sind solche kompakten Preformen aus gewickelten Rovings und ähnlichen Faserhalbzeugen sehr schwer zu durchtränken, vor allem in Dickenrichtung und bei großen Wandstärken.

In der US 2014/0014667 A1 wird ein Verfahren zur Herstellung eines Hohlkörpers für einen Druckbehälter aus faserverstärktem Kunststoff beschrieben. Dazu wird ein Fasergarn (Endlosfasern) verwendet, das über seine Länge und seinen Umfang mit sogenannten Spacern versehen ist, welche wie ein Stacheldraht angeordnet sind.

Die EP 1 419 875 A1 beschreibt ein Verstärkungsfasersubstrat, daraus gewonnenes Verbundmaterial und Verfahren zu dessen Herstellung. Auch hier wird zum Wickeln ein Spacer-Garn beschrieben.

Die EP 1 491 323 A1 beschreibt den Aufbau eines Komplexes aus Verstärkungsfasern. Als eine solche Verstärkungsfaser wird eine mit einem Garn umhüllte Faser bzw. ein solches Fasergarn erwähnt.

Gleich welches Ablageverfahren zur Herstellung der Faserpreformen verwendet wird, sind einer realisierbaren Materialstärke sowohl der Preformen als auch der zu erzeugenden Komopsitbauteile durch die Tränkbarkeit der Faserpreformen Grenzen gesetzt. Die Tränkbarkeit von Faserpreformen mit hoher Materialstärke bzw. -dicke ist insbesondere in deren Dicken-Richtung kritisch. Selbst dünnflüssige Harzsysteme mit langer Topfzeit dringen nicht bis zum Grund der Preformen durch, so dass trockene Bereiche übrig bleiben, die das Bauteil unbrauchbar machen.

Die grundlegende Idee der vorliegenden Erfindung war es, Möglichkeiten zu entwickeln, mit welchen sich die Tränkbarkeit von Faserpreformen, insbesondere bei hoher Materialstärke und insbesondere in Dicken-Richtung im Vergleich zum Stand der Technik verbessern lässt. Es sollten dabei allgemeingültige, für alle Materialien und Flüssigharztränkmethoden gültige Maßnahmen aufgezeigt werden.

Gegenstand der vorliegenden Erfindung ist demnach ein Verfahren zur Herstellung von rotationssymmetrischen, dickwandigen Kompositbauteilen durch Aufbauen von endformnahen, trockenen Preformen aus Schichten von Verstärkungsfasern und anschließender Imprägnierung mit Flüssigharz und Aushärter, wobei beim Aufbau der endformnahen, trockenen Faserpreformen gezielt Fließpfade für das flüssige Harz in den Faserpreformen angelegt werden, bevorzugt indem der Aufbau der Faserpreformen durch modifizierte, mit durch Bindern mit Kunststoff oder Harz oder Umwinden mit einem Faden bzw. Garn unter Anordnung von Einschnürungen in vorbestimmten Abständen, strukturell modifizierte, zusammengefasste und vorkompaktierte Rovings aus Verstärkungsfasern vorgenommen wird, um die Tränkbarkeit der Faserpreformen in Dicken-Richtung, das heißt im Wesentlichen senkrecht zu den Schichtebenen, zu erhöhen.

Durch die Schaffung von Fließpfaden für das flüssige Harz in der Dicken-Richtung der Faserpreform lässt sich diese dichter ausgestalten. Gleichzeitig kann das Harz die Faserpreform rascher durchdringen, wobei der Einschluss von Luft und/oder Reaktionsgasen und damit die Bildung von Fehlstellen und Poren unterdrückt werden. Es versteht sich, dass mit der rascheren Harzdurchtränkung in Dicken-Richtung eine raschere und vollständigere Durchtränkung der gesamten Preform einhergeht, was nicht zuletzt in einer Zeit- und Kostenersparnis resultiert und die Methode für eine Massenfertigung besser geeignet macht. Die Setzwege für die anschließende Harzeinbringung sind reduziert (<10%). Damit sind weitaus dickere Bauteile fertigbar und die Prozesssicherheit wird verbessert.

Bevorzugte Ausführungsformen der vorliegenden Erfindung sind in den Unteransprüchen definiert.

Ein Vorteil der vorliegenden Erfindung ist es, dass die Faserpreformen durch trockenes Legen und/oder Wickeln, bevorzugt Wickeln, der Verstärkungsfaserschichten aufgebaut werden können, auch in großer Materialstärke. Durch das gezielte Anlegen von Fließpfaden für das Harz ist dennoch mit hoher Prozesssicherheit eine rasche und vollständige Durchtränkung mit dem Harz möglich. Dadurch wird der Einsatzbereich des Harzinfusionsverfahrens, das zum Beispiel gegenüber der Verwendung von Prepregs Kostenvorteile aufgrund der günstigen Werkstoffpreise von Roving und Harzsystem verspricht, wesentlich erweitert. Faser und Harz können getrennt beschafft und nach Bedarf miteinander kombiniert werden.

Im Rahmen der vorliegenden Erfindung wurden verschiedene Techniken zur erfindungsgemäßen Einbringung von Fließpfaden in die Faserpreform bei deren Aufbau entwickelt und erprobt.

Die Fließpfade könnten durch gezieltes Zwischenlegen von thermoplastischen Vliesen erzeugt werden, welche ein geringes Flächengewicht von 5 bis maximal 50 g/m² besitzen. Man könnte hier rein als Beispiel ein Polyamidvlies von 12 g/m² einsetzen. Zunächst werden eine oder mehrere Lagen eines Fasermaterials auf einem Formkern drapiert oder darauf gewickelt. Nach dem eine bestimmte, vorgegebene Schichtdicke erreicht ist, wird die Faserschicht mit einem thermoplastischen Vlies ganz oder teilweise bedeckt und der Schichtaufbau zur Preform fortgesetzt, unter wiederholtem Zwischenlegen des Vlieses. Das Vlies wirkt als Abstandshalter, also Lückenbildner und gleichermaßen als Verteilermedium für das Harz.

Auch könnten die Fließpfade durch Einbringen von Lücken unmittelbar beim Legen und/oder Wickeln der Faserschichten erzeugt werden. Man kann dabei so vorgehen, dass die einzelnen Rovings, Faserlagen oder Faserbänder nicht überlappend oder auf Stoß abgelegt werden, sondern mit einem geringen Abstand von etwa 0,5 bis maximal 5 mm zueinander. Dadurch entstehen im Gesamtaufbau der Preform Lücken, welche den Harzfluss in Dicken-Richtung fördern, ohne die Qualität des Verbunds zu beeinträchtigen.

Erfindungsgemäß werden die Fließpfade aber angelegt, indem der Aufbau der Faserpreformen durch modifizierte, mit durch Bindern mit Kunststoff oder Harz oder Umwinden mit einem Faden bzw. Garn unter Anordnung von Einschnürungen in vorbestimmten Abständen, strukturell modifizierte, zusammengefasste und vorkompaktierte Rovings vorgenommen wird. Auf diese Weise können die Fließpfade gleichmäßig verteilt in einem Arbeitsgang über die Faserpreformen verteilt werden. Durch den Einsatz der modifizierten Rovings lassen sich Fließpfade derart generieren, dass die Tränkbarbeit der Faserpreform verbessert ist, selbst wenn bei hoher Fadenspannung gewickelt wird, damit die Preform auch unter beispielsweise 1 bar Druckdifferenz geringe Setzwege von kleiner 10% aufweist. Ohne das Einbringen gezielter Fließpfade ließe sich die Preform nicht derart verdichten, mit der Folge höherer Setzwege, somit dem Auftreten von Ondulationen und schlechten mechanischen Eigenschaften.

In einer weiteren bevorzugten Ausführungsform der vorliegenden Erfindung werden zum Einbringen der Lücken und Fließpfade beim Aufbau der Faserpreform die Lege- und/oder Wickelwinkel derart ausgewählt, dass die Anzahl der Kreuzungspunkte im Vergleich zum üblichen Legen/Wickeln erhöht ist. Auch hier wird die Bedeckungsdichte der Faserablage in Dicken-Richtung variiert, so dass gezielt Bereiche angelegt werden können, in welchen das Harz noch rascher in die Preform vordringen kann.

Derartige Fließpfade in der Faserpreform lassen sich auch durch ein Abwechseln von Umfangs- und Kreuzlagen erzeugen.

Als Roving wird bekanntlich ein Bündel, Strang oder Multifilamentgarn aus parallel angeordneten Endlosfasern, beispielsweise Glas-, Aramid- oder Kohlenstoff- bzw. Carbonfasern, bezeichnet. Es gibt auch gemischtfasrige Rovings. Sie weisen als solche einen elliptischen oder rechteckigen Querschnitt auf.

Um Lücken, respektive Fließpfade in daraus aufgebaute Faserpreformen einzubringen werden die Rovings erfindungsgemäß strukturell modifiziert, indem sie gebindert werden. Durch das Bindern mit Kunststoff oder Harz wird der Roving zusammengefasst und vorkompaktiert, sodass beim Wickeln oder Legen zwischen den Rovings automatisch Lücken und Fließpfade im Faseraufbau entstehen, durch die das zu infiltrierende Harz in Dickenrichtung gut vordringen kann . Je nachdem, wie viele solcher Fließpfade man in der Faserpreform provozieren möchte, kann die Anzahl der vorgenommenen Drehungen oder Bindungen oder die Bindermenge frei variiert und dem Anwendungsfall angepasst werden.

Bei einer Ausführungsform der vorliegenden Erfindung werden die Fließpfade beim Aufbau der Faserpreformen mit Hilfe von Rovings erzeugt, die mit einem zusätzlichen Faden bzw. einem Garn umwunden sind. Derartige umwundene Rovings können vor dem Belegen/Bewickeln in geeigneter Weise mit dem zusätzlichen Garn, z.B. aus Glasfaser oder Polyester, umwunden werden, sodass in vorbestimmten Abständen Einschnürungen am Roving angeordnet sind. Diese Einschnürungen bilden in Kombination mit dem Umwindungsgarn die gewünschten Fließpfade im fertigen Preformaufbau. Gleichzeitig wird mit der Umwindung die Geometrie des Roving stabilisiert und damit der Ablage- oder Wickelprozess weiter präzisiert.

Der Faden- bzw. Garndurchmesser und der Faden- bzw. Garnwerkstoff können nahezu frei variiert werden. So kann ein dickeres Garn mit stärkerem (größerem) Durchmesser größere Fließpfade erzeugen als ein dünnes Garn.

In einer ganz besonders bevorzugten Ausführungsform der vorliegenden Erfindung wird der für den Aufbau der Preform abzuwickelnde Roving gleichzeitig während des Abwickelns des Rovings mit dem Garn umwunden. Auf diese Weise ist es möglich von Fall zu Fall zu entscheiden, mit welchem Garnmaterial man den einzusetzenden Roving umwickelt. Auch die Anzahl der Umwindungen/Meter lässt sich an die jeweiligen Erfordernisse anpassen. Das Garn lässt sich mittels einer Spule dem Roving zuführen, wobei man mit Hilfe z.B. eines Pressluft- oder Elektroantriebs die Umdrehungsgeschwindigkeit steuert.

Der Garnwerkstoff kann so ausgewählt werden, dass er sich in der Harzmatrix auflöst oder nicht. Ein geeigneter Garnwerkstoff besteht aus Glas, Polyester, speziellen Polyamiden, wie Grilon^{®} (ESM-Grivory) und dergleichen Material.

Die Verstärkungsfasern, welche auch den Roving bilden können, werden vorzugsweise aus der Gruppe der Glasfasern, Kohlenstoff- bzw. Carbonfasern, Aramidfasern und/oder Polyesterfasern ausgewählt. Es können auch gemischtfasrige Rovings zum Einsatz kommen.

Zur Imprägnierung der so präparierten Faserpreformen für den Aufbau der Harzmatrix sind prinzipiell alle Flüssigharztränkverfahren wie Infusion, Injektion/RTM, vorzugsweise Infusion, mit allen geeigneten Harzsystemen, wie beispielsweise Duroplasten, z.B. Epoxidharzen, Vinylestern, Polyestern, Cyanatestern, Bismaleimiden, Polyimiden, Benzoxazinen, Polyurethanen, Phenolen und Isocyanuraten oder auch Thermoplasten, anwendbar.

Das erfindungsgemäße Verfahren ist zur Herstellung aller rotationssymmetrischen Bauteile, insbesondere für Druckbehälter (Innen- und Außendruck) sowie Rohre oder Luftfahrttriebwerkskomponenten, geeignet. Insbesondere geeignet ist es zur Herstellung dickwandiger Bauteile, da durch die in den Faserpreformen für das Harz vorgesehenen Fließpfade das Problem der Tränkbarkeit auf einzigartige Weise gelöst werden konnte. Eine vollständige, porenfreie Durchtränkung der Faserpreform ist Voraussetzung für eine höchste Qualität der Bauteile. Durch die eingebrachten Fließpfade können hochkompaktierte Faserpreformen getränkt werden, was Bauteile mit sehr hohen Faservolumenanteilen von über 60% erlaubt. Vor allem wird durch reduzierte Setzwege die Gefahr von Faserwelligkeiten stark reduziert bzw. ganz beseitigt. Selbstverständlich ist das Verfahren auch zur Herstellung trocken gelegter zweidimensionaler (ebener) Bauteile geeignet, wobei die Faserlagen ebenfalls im AFP-Verfahren aufgebaut werden können.

## Patentansprüche

1. Verfahren zur Herstellung von rotationssymmetrischen, dickwandigen Kompositbauteilen durch Aufbauen von endformnahen, trockenen Preformen aus Schichten von Verstärkungsfasern und anschließender Imprägnierung mit Flüssigharz und Aushärten, wobei beim Aufbau der endformnahen, trockenen Faserpreformen Fließpfade für das flüssige Harz in den Faserpreformen angelegt werden, indem zum Aufbau der Faserpreformen mit durch Bindern mit Kunststoff oder Harz oder Umwinden mit einem Faden bzw. Garn unter Anordnung von Einschnürungen in vorbestimmten Abständen, strukturell modifizierte, zusammengefasste und vorkompaktierte Rovings aus Verstärkungsfasern verwendet werden, wodurch beim Wickeln oder Legen zwischen den Rovings automatisch Fließpfade und Lücken in den Faseraufbau eingebracht werden, welche die Tränkbarkeit der Faserpreformen in Dicken-Richtung, d.h. senkrecht zu den Schichtebenen, erhöhen.

2. Verfahren nach Anspruch 1, **dadurch gekennzeichnet, dass** die Rovings zu Bändern definierter Breite zusammengefasst sind/werden.

3. Verfahren nach Anspruch 1 und 2, **dadurch gekennzeichnet, dass** die mit einem Garn umwundenen Rovings erzeugt werden, indem der Roving beim Aufbau der Faserpreform in-situ beim Abwickeln des Rovings mit dem Garn umwunden wird.

4. Verfahren nach den Ansprüchen 1 bis 3, **dadurch gekennzeichnet, dass** das zum Umwinden verwendete Garn in der zu erzeugenden Harzmatrix lösbar oder unlösbar ist.

5. Verfahren nach den Ansprüchen 1 bis 4, **dadurch gekennzeichnet, dass** die Fließpfade beim Aufbau der Faserpreform durch ein Abwechseln von Umfangs- und Kreuzlagen erzeugt werden.

6. Verfahren nach einem der Ansprüche 1 bis 5, **dadurch gekennzeichnet, dass** das Garn ein Glas-, Polyester-, Grilon^{®}-Garn oder dergleichen ist.

7. Verfahren nach einem jeden der Ansprüche 1 bis 6, **dadurch gekennzeichnet, dass** die Verstärkungsfasern aus der Gruppe der Glasfasern, Kohlenstofffasern, Aramidfasern und/oder Polyesterfasern ausgewählt werden.

8. Verfahren nach einem jeden der Ansprüche 1 bis 7, **dadurch gekennzeichnet, dass** die Harzmatrix aus der Gruppe der Duroplaste oder der Thermoplaste ausgewählt wird.

9. Verfahren nach Anspruch 8, **dadurch gekennzeichnet, dass** die Duroplaste aus der Gruppe der Epoxidharze, Vinylester, Polyester, Cyanatester, Bismaleimide, Polyimide, Benzoxazine, Polyurethane, Phenole und Isocyanurate ausgewählt werden.

10. Verfahren nach einem der Ansprüche 1 bis 9 zur Herstellung von rotationssymmetrischen, dickwandigen Bauteilen mit einem Faservolumenanteil von größer 60 %

11. Verfahren nach einem der Ansprüche 1 bis 10 zur Herstellung von Druckbehältern.

12. Verfahren nach Anspruch 11 zur Herstellung von Druckbehältern zur Verwendung in der Luft- und Raumfahrt.

## Claims

1. Process for producing rotationally symmetrical, thick-walled composite components by building up near-net-shape, dry preforms from layers of reinforcing fibers and subsequent impregnation with liquid resin and curing, whereby during the build-up of the near-net-shape, dry fiber preforms, flow paths for the liquid resin are created in the fiber preforms by using for the build-up of the fiber preforms structurally modified, combined and pre-compacted rovings made of reinforcing fibers by binding with plastic or resin or winding with a thread or yarn with constrictions arranged at predetermined intervals, whereby during winding or laying between the rovings, flow paths and gaps are automatically introduced into the fiber build-up, which increase the impregnability of the fiber preforms in the thickness direction, i.e. perpendicular to the layer planes.

2. Process according to claim 1, **characterized in that** the rovings are combined to form bands of defined width.

3. Process according to claim 1 and 2, **characterized in that** the rovings wound with a yarn are produced by winding the roving with the yarn in-situ during build-up of the fiber preform as the roving is unwound.

4. Process according to claims 1 to 3, **characterized in that** the yarn used for winding is soluble or insoluble in the resin matrix to be produced.

5. Process according to claims 1 to 4, **characterized in that** the flow paths during construction of the fiber preform are created by alternating circumferential and cross layers.

6. Process according to one of claims 1 to 5, **characterized in that** the yarn is a glass, polyester, Grilon^{®} yarn or the like.

7. Process according to any one of claims 1 to 6, **characterized in that** the reinforcing fibers are selected from the group of glass fibers, carbon fibers, aramid fibers and/or polyester fibers.

8. Process according to any one of claims 1 to 7, **characterized in that** the resin matrix is selected from the group of thermosets or thermoplastics.

9. Process according to claim 8, **characterized in that** the thermosets are selected from the group of epoxy resins, vinyl esters, polyesters, cyanate esters, bismaleimides, polyimides, benzoxazines, polyurethanes, phenols and isocyanurates.

10. Process according to one of claims 1 to 9 for producing rotationally symmetrical, thick-walled components with a fiber volume fraction of greater than 60%.

11. Process according to one of claims 1 to 10 for producing pressure vessels.

12. Process according to claim 11 for producing pressure vessels for use in aerospace.

## Revendications

1. Procédé de réalisation de composants composites à symétrie de révolution et à paroi épaisse par construction de préformes sèches proches de la forme finale à partir de couches de fibres de renforcement, suivie d'une imprégnation avec une résine liquide et d'un durcissement, dans lequel, lors de la construction des préformes de fibres sèches proches de la forme finale, on aménage des trajets d'écoulement pour la résine liquide dans les préformes de fibres, en utilisant, pour la construction des préformes de fibres, des rovings de fibres de renforcement regroupés et pré-compactés, structurellement modifiés par liage avec de la matière plastique ou de la résine ou par enlacement avec un filé ou un fil textile en prévoyant des rétrécissements à des intervalles prédéterminés, ce qui fait que, lors de l'enroulement ou de la pose, des trajets d'écoulement et des interstices sont automatiquement introduits dans la structure fibreuse entre les rovings, qui augmentent l'aptitude des préformes de fibres à l'imprégnation en direction de l'épaisseur, c'est-à-dire perpendiculairement aux plans des couches.

2. Procédé selon la revendication 1, **caractérisé en ce que** les rovings sont regroupés ou se font regrouper en bandes de largeur définie.

3. Procédé selon les revendications 1 et 2, **caractérisé en ce que** l'on réalise les rovings enlacés par un fil textile par enlacement du roving avec le fil textile in-situ pendant le déroulement du roving, pendant la construction de la préforme de fibres.

4. Procédé selon les revendications 1 à 3, **caractérisé en ce que** le fil textile utilisé pour l'enlacement est amovible ou inamovible dans la matrice de résine à réaliser.

5. Procédé selon les revendications 1 à 4, **caractérisé en ce que** l'on aménage les trajets d'écoulement pendant la construction de la préforme de fibres par une alternance de couches périphériques et de couches en croix.

6. Procédé selon l'une des revendications 1 à 5, **caractérisé en ce que** le fil textile est un fil de verre, de polyester, de Grilon^{®} ou similaire.

7. Procédé selon chacune des revendications 1 à 6, **caractérisé en ce que** l'on choisit les fibres de renforcement parmi le groupe comprenant les fibres de verre, les fibres de carbone, les fibres d'aramide et/ou les fibres de polyester.

8. Procédé selon la revendication 8, **caractérisé en ce que** l'on choisit les résines thermodurcissables parmi le groupe comprenant les résines époxy, les vinylesters, les polyesters, les esters de cyanate, les bismaléimides, les polyimides, les benzoxazines, les polyuréthannes, les phénols et les isocyanurates.

9. Procédé selon l'une des revendications 1 à 9 pour réaliser des composants à symétrie de révolution et à paroi épaisse ayant une proportion volumique de fibres supérieure à 60 %.

10. Procédé selon l'une des revendications 1 à 10 pour réaliser des récipients sous pression.

11. Procédé selon la revendication 11 pour réaliser des récipients sous pression destinés à l'utilisation dans l'aéronautique et l'aérospatiale.

12. Procédé selon chacune des revendications 1 à 7, **caractérisé en ce que** l'on choisit la matrice de résine parmi le groupe des résines thermodurcissables ou des résines thermoplastiques.
